# EUROPÄISCHE PATENTSCHRIFT

(11) **EP 3 032 513 B1**
(45) Veröffentlichungstag und Bekanntmachung des Hinweises auf die Patenterteilung: **16.08.2017**
(21) Anmeldenummer: 15199337.5
(22) Anmeldetag: 10.12.2015
(51) Int. Cl.: G08C 17/02

(54) **MEDIZINTECHNISCHE FUSSSTEUERUNG**
MEDICAL FOOT CONTROLLER
COMMANDE MEDICALE A PEDALE

(30) Priorität: 12.12.2014 DE 102014118528
(43) Veröffentlichungstag der Anmeldung: 15.06.2016
(73) Patentinhaber: AESCULAP AG, 78532 Tuttlingen (DE)
(72) Erfinder: Schönewerk, Erik, 78166 Donaueschingen (DE)
(74) Vertreter: Winter, Brandl, Fürniss, Hübner, Röss, Kaiser, Polte - Partnerschaft mbB

(56) Entgegenhaltungen:
- DE-A1-102013 105 822
- US-A1- 2008 312 584
- US-A1- 2013 289 770

## Beschreibung

Die vorliegende Erfindung betrifft ein Pairingverfahren zur kommunikationstechnischen drahtlosen Verbindung einer Bedieneinheit, insbesondere einer Fußschaltereinrichtung, einer medizintechnischen Steuerungseinheit, insbesondere einer Fußsteuerungseinheit, mit einem Steuergerät der medizintechnischen Steuerungseinheit, wobei die Bedieneinheit und das Steuergerät drahtlos miteinander kommunizieren. Sie betrifft des Weiteren eine medizintechnische Steuerungseinheit, insbesondere eine Fußsteuerungseinheit, mit einer Bedieneinheit, insbesondere einer Fußschaltereinrichtung, und einem mit dieser drahtlos kommunikationstechnisch verbindbaren Steuergerät, wobei die Bedieneinheit zumindest zwei Bedienelemente aufweist, bei deren jeweiliger nutzerseitiger Betätigung von dem Steuergerät ein Steuersignal an die medizintechnische Einrichtung zu deren Steuerung gegeben wird.

Aus dem Stand der Technik sind medizintechnische Fußsteuerungen bekannt, bei denen zwei per Funk miteinander kommunizierende Komponenten oder Geräte, zum Beispiel ein Motorsteuergerät und eine Funkfußsteuerung, verwendet werden. Um derartige Komponenten kommunikationstechnisch miteinander zu verbinden, ist es bekannt, eine sogenannte Pairing-Prozedur durchzuführen. Dabei wird ein besonderes Ereignis genutzt, bei dessen Auftreten die Geräte veranlasst werden, in einen Pairing-Modus zu wechseln. Im Stand der Technik ist dazu eine gesonderte Vorrichtung, zum Beispiel in Form eines zusätzlichen Tasters, erforderlich. Die gesonderte Vorrichtung wird während eines normalen Betriebs zur eigentlichen Steuerung nicht benötigt. Sie erhöht in nachteiliger Weise Kosten und Komplexität der Fußsteuerung. Gerade in Bezug auf Anforderungen im Bereich der Medizintechnik wird außerdem das Risiko einer Leckage am notwendigerweise wasserdicht ausgebildeten Gerät erhöht.

Aus der US 2013/0289770 A1 ist bekannt ein System zum Ausführen einer rechnerunterstützten Sicherheitsaktion bei einen motorisch angetriebenen Verstellung einer einstellbaren Bettposition. Aus der US 2008/0312584 A1 ist ein Verfahren zum Verifizieren einer drahtlosen Verbindung zwischen einer Infusionspumpe und einer Fernbedienung bekannt.

Ausgehend von dem vorstehend beschriebenen Stand der Technik liegt der Erfindung die Aufgabe zugrunde, ein Pairingverfahren für eine medizintechnische Steuerungseinheit sowie eine solche Steuerungseinheit, insbesondere eine medizintechnische Fußsteuerung, bereitzustellen, bei der eine Bedieneinheit der medizintechnischen Steuerungseinheit drahtlos mit einem Steuergerät der medizintechnischen Steuerungseinheit kommuniziert und ein Pairing der Bedieneinheit mit dem Steuergerät drahtlos erfolgt, wobei keine speziell hierfür eingebrachte Vorrichtung erforderlich ist.

Diese Aufgabe wird gelöst durch ein Pairingverfahren zur kommunikationstechnischen drahtlosen Verbindung oder Verheiratung einer Bedieneinheit einer medizintechnischen Steuerungseinheit mit einem Steuergerät der medizintechnischen Steuerungseinheit, wobei die medizintechnische Steuerungseinheit zum Steuern einer medizintechnischen Einrichtung eingerichtet und bestimmt ist, wobei die Bedieneinheit zumindest zwei Bedienelemente aufweist, bei oder infolge deren jeweiliger nutzerseitiger Betätigung ein Steuersignal von dem Steuergerät an die medizintechnische Einrichtung gegeben wird, wobei sich das Steuergerät in einem Pairing-Modus befindet oder in einen solchen Pairing-Modus gebracht wird, und die Bedieneinheit infolge einer nutzerseitigen kombinierten Betätigung zumindest zweier Bedienelemente in einen Pairing-Modus versetzt wird, indem die zumindest zwei Bedienelemente in einer zur Ausgabe eines Steuersignals von dem Steuergerät an die medizintechnische Einrichtung abweichenden Kombination betätigt werden, wobei die zumindest zwei Bedienelemente voneinander derart beabstandet und/oder räumlich voneinander getrennt sind, dass eine gleichzeitige Betätigung beider Bedienelemente nur mit beiden Händen oder beiden Füßen möglich ist, und die Bedieneinheit durch eine gleichzeitige Betätigung der zwei Bedienelemente in den Pairing-Modus gebracht wird. Da die Bedienelemente zur Eingabe von Anweisungen zur Steuerung der medizintechnischen Einrichtung ohnehin an der Bedieneinheit vorhanden sind, werden zum Einleiten einer Pairingprozedur keine gesonderten Bedienelemente benötigt. Die Bedieneinheit kann daher in vorteilhafter Weise einfach ausgebildet sein. Die Bedieneinheit und das Steuergerät können insbesondere mittels NFC oder Bluetooth miteinander kommunizieren. Hierfür eignet sich z.B. das proprietäre Funktprotokoll Steute-Wireless®.

Anders ausgedrückt kann sich das Motorsteuergerät im Pairing-Modus befinden bzw. kann per Bildschirmdialog dazu gebracht werden. Um die Bedieneinheit ebenfalls in den Pairing-Modus zu versetzen, werden zwei bereits vorhandene Bedienelemente verwendet, die ein Nutzer zur Steuerung der medizintechnischen Einrichtung über das Steuergerät benutzt. Hierbei wird nach der Erfindung vorzuweise eine Kombination verwendet, also die Bedienelemente in einer solchen Kombination betätigt, die versehentlich nur mit einer äußerst geringen Wahrscheinlichkeit betätigt wird sowie im Normalbetrieb - d.h. bei der eigentlichen Steuerung der medizintechnischen Einrichtung - nicht vorkommt. Dies könnte eine gleichzeitige Betätigung zum Beispiel von zwei außenseitig oder randseitig an der Bedieneinheit angeordneten Bedienelementen, insbesondere Außentastern sein.

Die beiden Bedienelemente können insbesondere soweit voneinander beabstandet angeordnet sein, dass sie nicht gleichzeitig mit einem Fuß betätigbar sind oder nur in einer von einer normalen Bedienung abweichenden Fußstellung betätigbar sind.

Im Pairing-Modus werden die Bedieneinheit und das Steuergerät miteinander gekoppelt oder verheiratet. Anders ausgedrückt wird bei einem Pairing-Vorgang eine bestimmte ausgewählte Bedieneinheit einem bestimmten Steuergerät zur Steuerung der medizintechnischen Einrichtung zugewiesen, so dass eine drahtlose Kommunikation dieser beiden bestimmten Einheiten möglich ist. Durch ein definiertes Koppeln oder Verheiraten der Bedieneinheit mit dem Steuergerät kann sichergestellt werden, dass ausschließlich die gewünschte Bedieneinheit mit dem gewünschten Steuergerät kommuniziert. Es kann sicher verhindert werden, dass beispielsweise eine falsche Bedieneinheit oder zwei Bedieneinheiten zeitgleich mit demselben Steuergerät kommunizieren.

Die korrekte oder gewünschte Paarung von Bedieneinheit und Steuergerät kann insbesondere erfolgen, indem dem Steuergerät und/oder der Bedieneinheit eine Kennung zugewiesen wird. Diese kann zum Beispiel in einem NFC-Tag enthalten sein. Aus Anwendersicht kann ein Pairing- Vorgang zum Beispiel derart ablaufen, dass nach einem Start des Steuergeräts, wenn keine kabelgebundene Bedieneinheit angeschlossen ist, der Nutzer aufgefordert wird, eine gewünschte Bedieneinheit mit dem Steuergerät zu koppeln (im Sinne eines Pairing). Die Aufforderung kann beispielsweise in einem Display des Steuergeräts angezeigt werden. Sie kann insbesondere bebildert sein. Der Nutzer kann insbesondere aufgefordert werden, die zu koppelnde Bedieneinheit in die Nähe des Steuergeräts oder dessen Displays zu bringen und ggf. die Kopplung zu bestätigen. Dadurch kann ein Test der Bedieneinheit durchgeführt werden und eine Bestätigung durch den Anwender erfolgen. Infolge einer solchen nutzerseitigen Bestätigung kann die Bedieneinheit in den Pairing-Modus versetzt werden. Das Steuergerät und die Bedieneinheit sind nun miteinander verheiratet. Erfolgt das Pairing per NFC kann die anwenderseitige Bestätigung entfallen, da die Zuordnung der Geräte zweifelsfrei ist. Der Anwender kann jedoch auch die Möglichkeit angeboten bekommen, bei einem ungewünschten Pairing-Ergebnis das Pairing wieder zu lösen (z.B. bei Doppeltastenbetätigung). Anschließend kann ein Funktionstest der Bedieneinheit durchgeführt werden.

Auf der Geräteebene kann das erfindungsgemäße Pairingverfahren ablaufen, indem in dem Fall, dass keine Bedieneinheit vom Steuergerät detektiert wurde, ein Funkmodul, insbesondere ein NFC-Modul, aktiviert wird oder ist. Es kann eine Handlungsaufforderung zur Verheiratung an den Nutzer ausgegeben werden. Das Funkmodul kann eingeschaltet sein oder werden. Nach der Erfindung kann nun eine Suche nach einem NFC-Tag in Reichweite des Funkmoduls erfolgen.

Stellt das Steuergerät ein NFC-Tag fest, kann dieses zunächst ausgelesen werden. Es kann eine Kennung gesucht werden, um den Gerätetyp der Bedieneinheit zu identifizieren. Gehört der erfasste Tag zu einer geeigneten oder gewünschten Bedieneinheit, liest das Steuergerät eine ID eines HF-Moduls der Bedieneinheit aus und kann in einen Schreibmodus wechseln, um seine eigene HF-Modul-ID in das Tag zu schreiben. Anschließend kann der NFC-Transceiver abgeschaltet werden.

Durch die vorbeschriebenen Vorgänge kann die Bedieneinheit aus dem Schlafmodus aufwachen bzw. in einen aktiven Zustand wechseln. Sie kann daraufhin eine im Tag stehende Kennung oder ID auslesen. Sie kann des Weiteren einen Verbindungsaufbau, zum Beispiel mittels Steute-Wireless®, initiieren und ggf. aufbauen. Das Steuergerät empfängt den Verbindungsversuch der Bedieneinheit und kann diesen insbesondere selbsttätig annehmen. Die bei dem Verfahren nach der Erfindung erfolgende nutzerseitige kombinierte Betätigung zumindest zweier Bedienelemente, um die Bedieneinheit in einen Pairing-Modus zu bringen, kann bewirken, dass die Bedieneinheit eine im Tag stehende Kennung oder ID ausliest. Bei Verwendung von NFC ist die Doppelbetätigung nicht notwendig, da durch die geerntete Spannung die Bedieneinheit selbsttätig geweckt wird, wenn diese in die Nähe des Steuergeräts gebracht wird. Sie kann alternativ oder zusätzlich den Verbindungsaufbau initiieren und ggf. aufbauen. Auch kann sie alternativ oder zusätzlich bewirken, dass die Bedieneinheit aus einem Ruhezustand erwacht bzw. aktiviert wird. Schließlich kann sie eine nutzerseitige Bestätigung des Pairing-Vorgangs bilden, die insbesondere auf die vorbeschriebene Kommunikation zwischen Bedieneinheit und Steuergerät keinen Einfluss haben muss, sondern dazu dienen kann, empfangene Daten im Steuergerät intern für die Steuerung der medizintechnischen Einrichtung zu verwenden.

Auf Elektronikebene kann ein NFC-Transceiver, beispielsweise CR95HF (ST), bei einer Inbetriebnahme ein magnetisches Wechselfeld aussenden und versuchen, in Reichweite befindliche Tags anzusprechen. In der Bedieneinheit kann ein NFC-EEPROM, zum Beispiel ein M24LR04E (ST) verbaut sein. Dieses kann vorzugsweise mittels Energy Harvesting über eine Rahmenantenne aus dem vom Transceiver ausgesendeten Wechselfeld seine Betriebsenergie beziehen. Der Transceiver kann - unter Nennung korrekter Passwörter oder Kennungen -im EEPROM enthaltenen Daten auslesen und einen Sektor, der die ID des Steuergerätes enthalten soll, auch beschreiben. Dadurch liegen nun beiderseitig - auf Seiten der Bedieneinheit sowie auf Seiten des Steuergeräts - die jeweils erforderlichen Verheiratungs- oder Pairinginformationen vor.

Das EEPROM kann die "geerntete" Versorgungsspannung insbesondere an einem Pin ausgeben. Ein Mikrocontroller der Bedieneinheit kann daher mittels eines HW-Interrupts aufwachen oder aktiviert werden. Die Betriebsspannung des EEPROM kann eingeschaltet werden. Verbindungsdaten aus dem EEPROM können beispielsweise per I²C ausgelesen werden. Die EEPROM-Versorgungsspannung kann wieder abgeschaltet werden und die Verbindung zum Steuergerät kann zum Beispiel mittels Steute- Wireless® aufgebaut werden.

Die Bedieneinheit kann insbesondere eine Fußschaltereinrichtung oder eine Handsteuerung sein. Sie kommuniziert drahtlos mit dem Steuergerät, welches wiederum die medizintechnische Einrichtung steuert. Ein Bedienelement der Bedieneinheit kann vorzugsweise ein Taster oder ein Pedal sein, das von einem Nutzer betätigt wird, um die medizintechnische Einrichtung über das Steuergerät mit diesem zu steuern. Die zumindest zwei Bedienelemente können insbesondere durch eine gleichzeitige Betätigung der zwei Bedienelemente in den Pairing-Modus gebracht werden. Bei einer Ausführungsform können die zumindest zwei Bedienelemente räumlich voneinander getrennt und/oder beabstandet sein. Sie können insbesondere voneinander derart beabstandet und/oder räumlich voneinander getrennt sein, dass eine gleichzeitige Betätigung beider Bedienelemente oder eine Betätigung beider Bedienelemente in der für ein Pairing erforderlichen Kombination nur mit beiden Händen bzw. beiden Füßen möglich ist. Auf diese Weise ist eine bewusste nutzerseitige Betätigung der Bedieneinheit für den Pairing-Vorgang erforderlich und ein versehentliches Einleiten eines Pairing-Vorgangs ausgeschlossen.

Bei einer Ausführungsform kann die Bedieneinheit drei nebeneinander angeordnete Bedienelemente aufweisen und insbesondere infolge einer nutzerseitigen kombinierten Betätigung der beiden äußeren Bedienelemente in einen Pairing-Modus versetzt werden. Derartige Anordnungen von Bedienelementen sind insbesondere bei Fußschalteinrichtungen zweckmäßig, so dass zur Anwendung des Verfahrens nach der Erfindung auf bekannte Hardware zurückgegriffen werden kann.

Die Bedienelemente, insbesondere die in Kombination für einen Pairing-Vorgang zu betätigenden Bedienelemente, sind nach einem Vorschlag der Erfindung konstruktiv so ausgelegt, dass ein Stapeln von Bedieneinrichtungen nicht zu einem Betätigen der beiden Seitentaster führen kann, wie dies für einen Pairing-Vorgang erforderlich wäre.

Nach einer weiteren Ausführungsform kann die Bedieneinheit durch eine einen festgelegten Zeitraum, vorzugsweise 2 bis 4 Sekunden, bevorzugter 3 Sekunden, andauernde kombinierte Betätigung der zumindest zwei Bedienelemente in den Pairing-Modus gebracht werden. Eine solche Zeitspanne kann insbesondere genutzt werden, um einen Selbsttest der Bedieneinheit durchzuführen, um eventuell vorliegende Defekte zu erkennen.
Vorrichtungsseitig wird die der Erfindung zugrundeliegende Aufgabe gelöst durch eine medizintechnische Steuerungseinheit, insbesondere eine medizintechnische Fußsteuerungseinheit, mit einer Bedieneinheit und einem mit dieser drahtlos kommunikationstechnisch verbindbaren Steuergerät. Die Bedieneinheit weist zumindest zwei Bedienelemente auf. Bei deren jeweiliger nutzerseitiger Betätigung wird zur Steuerung der medizintechnischen Einrichtung von dem Steuergerät ein Steuersignal an die medizintechnische Einrichtung gegeben. Das Steuergerät ist eingerichtet, sich in einem Pairing-Modus zu befinden oder in einen solchen Pairing-Modus gebracht zu werden. Die Bedieneinheit kann durch eine kombinierte Betätigung zumindest zweier Bedienelemente in einen Pairing-Modus gebracht werden. Dazu sind die zumindest zwei Bedienelemente in einer zur Ausgabe eines Steuersignals von dem Steuergerät an die medizintechnische Einrichtung abweichenden Kombination zu betätigen. Die zumindest zwei Bedienelemente sind voneinander derart beabstandet und/oder räumlich voneinander getrennt, dass eine gleichzeitige Betätigung beider Bedienelemente nur mit beiden Händen oder beiden Füßen möglich ist, und die Bedieneinheit durch eine gleichzeitige Betätigung der zwei Bedienelemente in den Pairing-Modus zu bringen ist. Die medizintechnische Steuerungseinheit nach der Erfindung ist insbesondere geeignet und eingerichtet zum Durchführen eines Verfahrens nach der Erfindung, insbesondere eines Verfahrens nach einem der angehängten Ansprüche.

Nach einer Ausführungsform kann ein NFC-Transceiver der Bedieneinheit und/oder des Steuergeräts eine Rahmenantenne aufweisen, über die ein magnetisches Wechselfeld abgestrahlt wird. Eine größere Fläche der Rahmenantenne ermöglicht tendenziell eine größere Reichweite. Sie liegt im Normalfall bei ca. 5-10cm. Die Antenne ist vorzugsweise in das Steuergerät integriert. Sie kann insbesondere eine PCB-Antenne oder eine Folien-Antenne oder eine Ferritfolie sein. Generell muss die Antenne genau auf die Frequenz und den Transceiver-IC abgestimmt bzw. angepasst werden.

Die Bedieneinheit kann ein NFC-EEPROM, insbesondere vom Typ M24LR04E, mit einer geeigneten Beschaltung aufweisen. Das NFC-EEPROM weist vorzugsweise zumindest einen Pull-Up für einen I²C-Bus, ein FET zum Schalten der Spannungsversorgung und/oder einen Blockkondensator auf.

Das Steuergerät kann bei einer Ausführungsform einen NFC-Transceiver vom Typ CR95HF mit Anpassnetzwerk, insbesondere mit diversen kleineren SMD-Kondensatoren und -Widerständen, und einen Quarz aufweisen.

Nach einer Ausführungsform ist vorgesehen, dass zwischen der Bedieneinheit und dem Steuergerät iterativ Kontaktsignale ausgetauscht werden, z.B. indem über einen bestimmten festgelegten Zeitraum (z.B. 3 Minuten) innerhalb festgelegter Intervalle (z.B. alle 5 Sekunden) ein Ping gesendet wird.

Bei einer Ausführungsform der Erfindung ist vorgesehen, dass falls die Bedieneinheit das Steuergerät für eine definierte Zeit nicht erreicht oder nicht mehr erreicht, Pairing-Vorgänge eingestellt werden, eine Partnerkennung gelöscht bzw. als ungültig markiert wird und die Bedieneinheit in einen Schlaf- oder Standbymodus wechselt.

Nach einer weiteren Ausführungsform ist vorgesehen, dass falls das Steuergerät ausgeschaltet wird, eine integrierte ,real time clock' (RTC) zurückgesetzt wird. Diese kann mit einem entsprechend dimensionierten Pufferkondensator beschaltet sein und läuft daher weiter. Wird das Steuergerät erneut gestartet, kann der aktuelle RTC-Stand ausgewertet werden. Liegt dieser unter einer definierten Wert (z.B. 5 Minuten), gilt die hinterlegte Partnerkennung der letzten verheirateten Bedieneinheit weiterhin und Signale dieser Bedieneinheit werden vom Steuergerät verarbeitet, insbesondere kann ein Transceiver des Steuergeräts auf ein Signal der Bedieneinheit reagieren. Liegt der Wert des RTC-Stands dagegen auf oder über einem definierten Grenzwert, kann die Partnerkennung gelöscht bzw. als ungültig markiert werden.

Weitere Merkmale und Vorteile der vorliegenden Erfindung ergeben sich aus der folgenden beispielhaften Beschreibung der Erfindung sowie besonders bevorzugter und nicht einschränkender Ausführungsformen anhand von Figuren, die lediglich dem Verständnis der Erfindung dienen. Dabei zeigt:
Figur 1 eine Bedieneinheit zur Durchführung des Verfahrens nach der Erfindung schematisch in einer Aufsicht und
Figur 2 eine schematische Darstellung des Ablaufs eines beispielhaften Verfahrens nach der Erfindung.

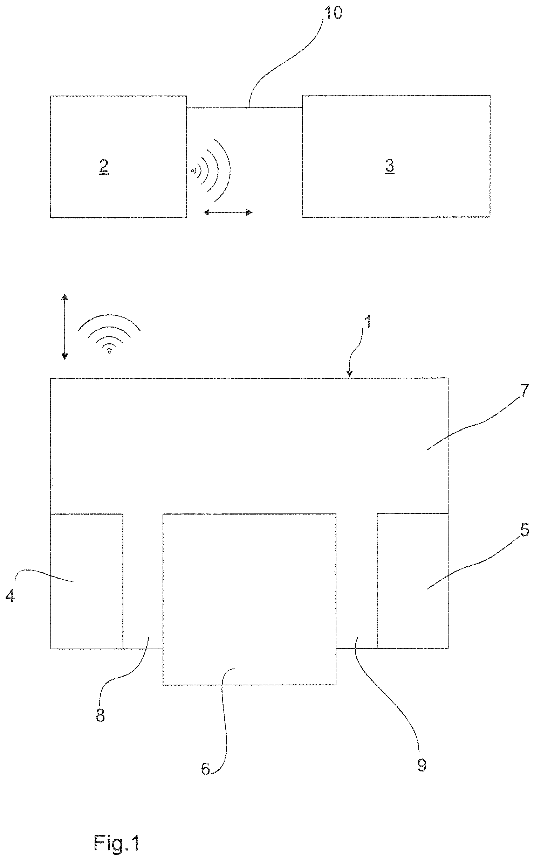

In Figur 1 ist eine Fußschaltereinheit 1 als Bedieneinheit 1 gezeigt. Diese weist ein Gehäuse 7 auf, an dem ein erstes Bedienelement 4 in Form einer randseitigen Fußtasters 4 (im Folgenden auch als Schalter S4 bezeichnet), ein zweites Bedienelement 5 in Form eines auf der dem Fußtaster 4 gegenüberliegenden Seite des Gehäuses 7 angeordneten Fußtasters 5 (im Folgenden auch als Schalter S5 bezeichnet) und ein Mitteltaster 6 (im Folgenden auch als Schalter S6 bezeichnet) angeordnet sind. Der Fußtaster 4, der Fußtaster 5 und der Mitteltaster 6 sind jeweils Bedienelemente, die ein Nutzer zur Steuerung einer mit der Fußschaltereinheit 1 gesteuerten medizintechnischen Einrichtung 3 zu deren medizinischer Anwendung betätigt.

Wie in der Figur angedeutet ist, kommuniziert die Fußschaltereinheit 1 drahtlos mit einem Steuergerät 2. Dieses steuert die medizintechnische Einrichtung 3 drahtlos und/oder über eine geeignete Schaltung 10.

Zwischen dem Fußtaster 4 und dem Mitteltaster 6 sowie zwischen dem Fußtaster 5 und dem Mitteltaster 6 ist jeweils ein Steg 8, 9 angeordnet. Dieser bewirkt, dass zwischen den genannten Tastern 4, 5, 6 ein Zwischenraum oder Abstand vorliegt, um eine versehentliche oder unbeabsichtigte Betätigung des falschen Tasters vermeiden zu können.

Gegenüber dem Mitteltaster 6 sind die Fußtaster 4, 5 in Richtung des Gehäuses 7 zurückspringend angeordnet oder ausgebildet. Dieses Ausbildung bewirkt, dass die beiden randseitigen Fußtaster 4, 5 nicht in Kombination miteinander oder sogar gleichzeitig mit nur einem Fuß betätigt werden können. Eine kombinierte und/oder gleichzeitige Betätigung der randseitigen Fußtaster 4, 5 ist also nur durch eine bewusste Betätigung mit beiden Füßen des Nutzers möglich. Auf diese Weise ist sichergestellt, dass eine solche Betätigung, die nach der Erfindung ein Pairing der Bedieneinheit 1 mit der in der Figur angedeuteten Steuereinheit 2 bewirkt, nicht versehentlich gestartet werden kann.

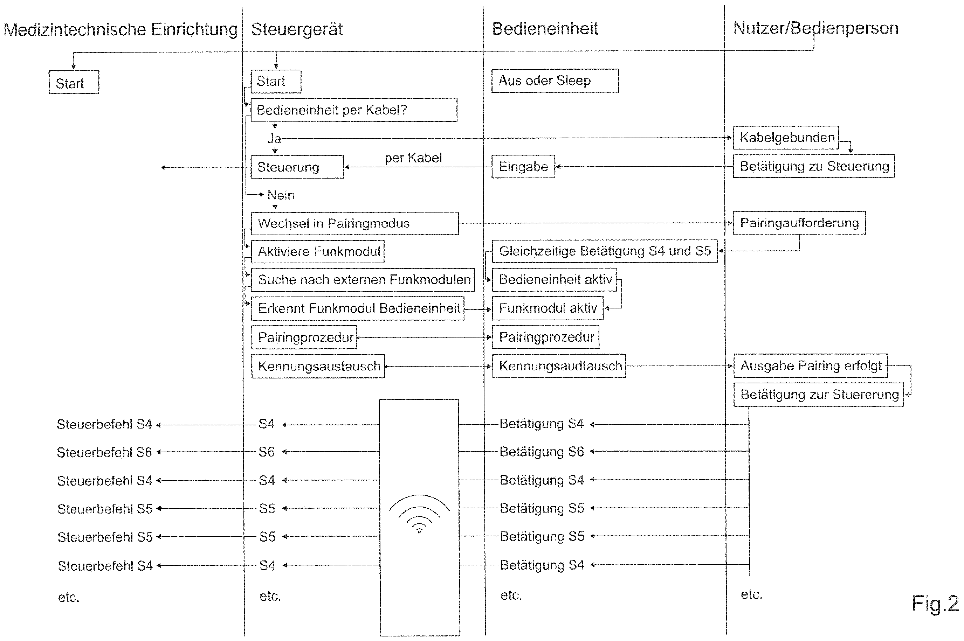

Ein beispielhafter Ablauf des Verfahrens ist in Figur 2 schematisch gezeigt. Das Verfahren beginnt durch Starten der medizintechnischen Einrichtung 3 und des Steuergeräts 2 durch einen Nutzer oder eine Bedienperson. Die Bedieneinheit 1 ist zu diesem Zeitpunkt ausgeschaltet bzw. befindet sich in einem Ruhezustand (Sleep-Modus).

Nach dem Start überprüft das Steuergerät 2, ob eine Bedieneinheit 1 mittels Kabel angeschlossen ist. Wird eine solche mittels Kabel angeschlossene Bedieneinheit 1 erkannt, wird eine entsprechende Mitteilung an den Nutzer ausgegeben und es erfolgt eine Steuerung der medizintechnischen Einrichtung 3 über das Steuergerät 2 durch nutzerseitige Eingabe von Steuerbefehlen in die per Kabel angeschlossene Bedieneinheit 1.

Wird keine mittels Kabel angeschlossene Bedieneinheit 1 erkannt, wechselt das Steuergerät 2 in den Pairingmodus. Alternativ kann das Steuergerät 2 direkt in den Pairingmodus wechseln oder gebracht werden. In diesem wird ein Funkmodul des Steuergeräts 2 aktiviert und eine Aufforderung an den Nutzer ausgegeben, eine Pairingprozedur einzuleiten. Im dargestellten Beispiel wird die Pairingprozedur eingeleitet, indem der Nutzer die Schalter S4 und S5 der Bedieneinheit 1 gleichzeitig für eine bestimmte Zeitdauer, z.B. für drei Sekunden, betätigt.

Infolge dieser die Pairingprozedur einleitenden nutzerseitigen Betätigung wird die Bedieneinheit 1 und dessen Funkmodul aktiviert. Derweil sucht das Steuergerät 2 mittels seines Funkmoduls nach externen Funkmodulen in der Nähe befindlicher Bediengeräte 1. Das Steuergerät 2 erkennt die Bedieneinheit 1, woraufhin das Pairing durchgeführt wird, z.B. unter anderem durch Austausch von Kennungen oder Passwörtern. Nach erfolgtem Pairing wird eine Mitteilung an den Nutzer ausgegeben, dass das Pairing erfolgreich abgeschlossen wurde.

Der Nutzer kann daraufhin durch Betätigung der Schalter S4, S5, S6 der Bedieneinheit 1 über das Steuergerät 2 die medizintechnische Einrichtung 3 steuern. Bei einer Betätigung des Schalters S4 gibt das Steuergerät 2 einen entsprechenden Befehl an die medizintechnische Einrichtung 3 aus. Entsprechendes gilt bei einer Betätigung der Schalter S5 oder S6. Die zur Steuerung der medizintechnischen Einrichtung 3 erforderlichen Betätigungen der Schalter der Bedieneinheit 1 unterscheiden sich von der zum Einleiten des Pairings erforderlichen gleichzeitigen Betätigung der Schalter S4 und S5.

Die Steuerung der medizintechnischen Einrichtung 3 mittels der mit dem Steuergerät 2 über Funk verbundenen Bedieneinheit 1 ist solange möglich, bis eine Entkopplung durch den Nutzer erfolgt oder die Bedieneinheit 1 und/oder das Steuergerät 2 ausgeschaltet oder für einen vorbestimmten Zeitraum nicht genutzt werden.

## Patentansprüche

1. Pairingverfahren zur kommunikationstechnischen drahtlosen Verbindung einer Bedieneinheit (1) einer medizintechnischen Steuerungseinheit mit einem Steuergerät (2) der medizintechnischen Steuerungseinheit, wobei
die medizintechnische Steuerungseinheit zum Steuern einer medizintechnischen Einrichtung (3) eingerichtet und bestimmt ist,
die Bedieneinheit (1) zumindest zwei Bedienelemente (4, 5) aufweist, bei deren jeweiliger nutzerseitiger Betätigung ein Steuersignal von dem Steuergerät (2) an die medizintechnische Einrichtung (3) gegeben wird,
sich das Steuergerät (2) in einem Pairing-Modus befindet, und
die Bedieneinheit (1) infolge einer nutzerseitigen kombinierten Betätigung zumindest zweier Bedienelemente (4, 5) in einen Pairing-Modus versetzt wird, indem die zumindest zwei Bedienelemente (4, 5) in einer zur Ausgabe eines Steuersignals von dem Steuergerät (2) an die medizintechnische Einrichtung (3) abweichenden Kombination betätigt werden,
**dadurch gekennzeichnet, dass**
die zumindest zwei Bedienelemente (4, 5) voneinander derart beabstandet und/oder räumlich voneinander getrennt sind, dass eine gleichzeitige Betätigung beider Bedienelemente (4, 5) nur mit beiden Händen oder beiden Füßen möglich ist, und die Bedieneinheit (1) durch eine gleichzeitige Betätigung der zwei Bedienelemente (4, 5) in den Pairing-Modus gebracht wird.

2. Pairingverfahren nach Anspruch 1, **dadurch gekennzeichnet, dass** die Bedieneinheit (1) durch eine einen festgelegten Zeitraum, vorzugsweise 2 bis 4 Sekunden, bevorzugter 3 Sekunden, andauernde kombinierte Betätigung der zumindest zwei Bedienelemente (4, 5) in den Pairing-Modus gebracht wird.

3. Pairingverfahren nach einem der vorstehenden Ansprüche, **dadurch gekennzeichnet, dass** die zumindest zwei Bedienelemente (4, 5) räumlich voneinander getrennt sind.

4. Pairingverfahren nach einem der vorstehenden Ansprüche, **dadurch gekennzeichnet, dass** die Bedieneinheit (1) eine Fußschaltereinrichtung ist.

5. Pairingverfahren nach einem der vorstehenden Ansprüche, **dadurch gekennzeichnet, dass** die Bedieneinheit (1) drei nebeneinander angeordnete Bedienelemente (4, 5, 6) aufweist und die Bedieneinheit (1) infolge einer nutzerseitigen kombinierten Betätigung der beiden äußeren Bedienelemente (4, 5) in einen Pairing-Modus versetzt wird.

6. Pairingverfahren nach einem der vorstehenden Ansprüche, **dadurch gekennzeichnet, dass** die Bedieneinheit (1) und das Steuergerät (2) mittels NFC oder Bluetooth kommunizieren.

7. Medizintechnische Steuerungseinheit, insbesondere Fußsteuerungseinheit, mit einer Bedieneinheit (1) und einem mit dieser drahtlos kommunikationstechnisch verbindbaren Steuergerät (2),
wobei die Bedieneinheit (1) zumindest zwei Bedienelemente (4, 5) aufweist, bei deren jeweiliger nutzerseitiger Betätigung ein Steuersignal von dem Steuergerät (2) an die medizintechnische Einrichtung (3) gegeben wird,
wobei sich das Steuergerät (2) in einem Pairing-Modus befindet oder in einen solchen Pairing-Modus gebracht werden kann, und
die Bedieneinheit (1) durch eine kombinierte Betätigung zumindest zweier Bedienelemente (4, 5) in einen Pairing-Modus gebracht werden kann, indem die zumindest zwei Bedienelemente (4, 5) in einer zur Ausgabe eines Steuersignals von dem Steuergerät (2) an die medizintechnische Einrichtung (3) abweichenden Kombination betätigt werden,
**dadurch gekennzeichnet, dass**
die zumindest zwei Bedienelemente (4, 5) voneinander derart beabstandet und/oder räumlich voneinander getrennt sind, dass eine gleichzeitige Betätigung beider Bedienelemente (4, 5) nur mit beiden Händen oder beiden Füßen möglich ist, und die Bedieneinheit (1) durch eine gleichzeitige Betätigung der zwei Bedienelemente (4, 5) in den Pairing-Modus gebracht wird.

8. Medizintechnische Steuerungseinheit nach Anspruch 7, geeignet und eingerichtet zum Durchführen eines Verfahrens nach einem der Ansprüche 1 bis 6.

## Claims

1. A pairing method for wireless communication of an operating unit (1) of a medical control unit with a control apparatus (2) of said medical control unit, wherein
the medical control unit is arranged and intended for controlling a medical device (3),
the operating unit (1) includes at least two operating elements (4, 5) upon the respective user-side actuation of which a control signal is transmitted from the control apparatus (2) to the medical device (3),
the control apparatus (2) is in a pairing mode, and
the operating unit (1) is put into a pairing mode due to user-side combined actuation of at least two operating elements (4, 5), wherein the at least two operating elements (4, 5) are actuated in a combination which deviates from outputting of a control signal from the control apparatus (2) to the medical device (3),
**characterized in that**
the at least two operating elements (4, 5) are spaced apart and/or spatially separated from each other in such a manner that simultaneous actuation of the two operating elements (4, 5) is possible only two-handed or by both feet, and that the operating unit (1) is put into the pairing mode by simultaneous actuation of the two operating elements (4, 5).

2. The pairing method according to claim 1, **characterized in that** the operating unit (1) is put into the pairing mode by a combined actuation of the at least two operating elements (4, 5) lasting a fixed period of time, preferably 2 to 4 seconds, more preferably 3 seconds.

3. The pairing method according to any one of the preceding claims, **characterized in that** the at least two operating elements (4, 5) are spatially separated from each other.

4. The pairing method according to any one of the preceding claims, **characterized in that** the operating unit (1) is a foot-operated switch means.

5. The pairing method according to any one of the preceding claims, **characterized in that** the operating unit (1) includes three operating elements (4, 5, 6) arranged side by side and the operating unit (1) is put into a pairing mode due to a user-side combined actuation of the two outer operating elements (4, 5).

6. The pairing method according to any one of the preceding claims, **characterized in that** the operating unit (1) and the control apparatus (2) communicate via NFC or Bluetooth.

7. A medical control unit, especially a foot-operated control unit, comprising an operating unit (1) and a control apparatus (2) adapted to be wirelessly connectable for communication with the operating unit (1),
wherein the operating unit (1) includes at least two operating elements (4, 5) upon the respective user-side actuation of which a control signal is transmitted from the control apparatus (2) to the medical device (3),
wherein the control apparatus (2) is in a pairing mode or is adapted to be put into said pairing mode, and
the operating unit (1) is adapted to be put into a pairing mode by combined actuation of at least two operating elements (4, 5) by actuating the at least two operating elements (4, 5) in a combination deviating from an output of a control signal from the control apparatus (2) to the medical device (3),
**characterized in that**
the at least two operating elements (4, 5) are spaced apart and/or spatially separated from each other in such a manner that simultaneous actuation of the two operating elements (4, 5) is possible only two-handed or by both feet, and that the operating unit (1) is put into the pairing mode by simultaneous actuation of the two operating elements (4, 5).

8. The medical control unit according to claim 7, which is adapted and arranged to implement a method according to any one of the claims 1 to 6.

## Revendications

1. Procédé d'appariement destiné à la liaison de communication sans fil d'une unité de commande (1) d'une unité de commande médicale avec un appareil de commande (2) de l'unité de commande médicale, dans lequel
l'unité de commande médicale est conçue et définie pour commander un dispositif médical (3),
l'unité de commande (1) présente au moins deux éléments de commande (4, 5), dont l'actionnement respectif côté utilisateur transmet un signal de commande depuis l'appareil de commande (2) au dispositif médical (3),
l'appareil de commande (2) se trouve dans un mode d'appariement, et
à la suite d'un actionnement combiné d'au moins deux éléments de commande (4, 5) côté utilisateur, l'unité de commande (1) est amenée dans un mode d'appariement, les au moins deux éléments de commande (4, 5) étant actionnés dans une combinaison différente de l'émission d'un signal de commande depuis l'appareil de commande (2) au dispositif médical (3),
**caractérisé en ce que**
les au moins deux éléments de commande (4, 5) sont distants l'un de l'autre et/ou séparés l'un de l'autre dans l'espace de telle sorte qu'un actionnement simultané des deux éléments de commande (4, 5) est possible uniquement avec les deux mains ou les deux pieds, et l'unité de commande (1) est amenée dans le mode d'appariement par un actionnement simultané des deux éléments de commande (4, 5).

2. Procédé d'appariement selon la revendication 1, **caractérisé en ce que** l'unité de commande (1) est amenée dans le mode d'appariement par un actionnement combiné des au moins deux éléments de commande (4, 5) durant une période définie, de préférence 2 à 4 secondes, de manière davantage préférée 3 secondes.

3. Procédé d'appariement selon l'une quelconque des revendications précédentes, **caractérisé en ce que** les au moins deux éléments de commande (4, 5) sont séparés l'un de l'autre dans l'espace.

4. Procédé d'appariement selon l'une quelconque des revendications précédentes, **caractérisé en ce que** l'unité de commande (1) est un dispositif de commande à pédale.

5. Procédé d'appariement selon l'une quelconque des revendications précédentes, **caractérisé en ce que** l'unité de commande (1) présente trois éléments de commande (4, 5, 6) disposés les uns à côté des autres et l'unité de commande (1) est amenée dans un mode d'appariement à la suite d'un actionnement combiné côté utilisateur des deux éléments de commande (4, 5) extérieurs.

6. Procédé d'appariement selon l'une quelconque des revendications précédentes, **caractérisé en ce que** l'unité de commande (1) et l'appareil de commande (2) communiquent par NFC ou Bluetooth.

7. Unité de commande médicale, en particulier une unité de commande à pédale, avec une unité de commande (1) et un appareil de commande (2) pouvant faire l'objet d'une liaison de communication sans fil avec celle-ci,
dans laquelle l'unité de commande (1) présente au moins deux éléments de commande (4, 5), dont l'actionnement respectif côté utilisateur transmet un signal de commande depuis l'appareil de commande (2) au dispositif médical (3),
dans laquelle l'appareil de commande (2) se trouve dans un mode d'appariement ou peut être amené dans un tel mode d'appariement, et
par un actionnement combiné d'au moins deux éléments de commande (4, 5), l'unité de commande (1) peut être amenée dans un mode d'appariement, les au moins deux éléments de commande (4, 5) étant actionnés dans une combinaison différente de l'émission d'un signal de commande depuis l'appareil de commande (2) au dispositif médical (3),
**caractérisé en ce que**
les au moins deux éléments de commande (4, 5) sont distants l'un de l'autre et/ou séparés l'un de l'autre dans l'espace de telle sorte qu'un actionnement simultané des deux éléments de commande (4, 5) est possible uniquement avec les deux mains ou les deux pieds, et l'unité de commande (1) est amenée dans le mode d'appariement par un actionnement simultané des deux éléments de commande (4, 5).

8. Unité de commande médicale selon la revendication 7, adaptée et conçue pour la mise en oeuvre d'un procédé selon l'une quelconque des revendications 1 à 6.
